# EUROPÄISCHE PATENTANMELDUNG

(11) **EP 0 878 501 A2**
(43) Veröffentlichungstag der Anmeldung: **18.11.1998**
(21) Anmeldenummer: 98108764.6
(22) Anmeldetag: 14.05.1998
(51) Int. Cl.: C08J 11/06, B29B 17/00, B01J 20/26

(54) **Verfahren zur Aufbereitung von Kunststoffen sowie Verwendung von aufbereiteten Kunststoffen als Adsorptionsmittel**

(30) Priorität: 16.05.1997 DE 19720485
(71) Anmelder: Budny, Lucyna, 41460 Neuss (DE)
(72) Erfinder: Budny, Lucyna, 41460 Neuss (DE)
(74) Vertreter: Lenzing, Andreas, Dr.

(57) **Zusammenfassung**

Die Erfindung betrifft ein Verfahren zur Aufbereitung von Kunststoffen, insbesondere von aufgeschäumtem Polystyrol und Polyurethan, durch mechanische Zerkleinerung sowie die Verwendung von aufbereiteten Kunststoffen als Adsorptionsmittel für Mineralöl und dergleichen.

## Beschreibung

Die vorliegende Erfindung betrifft Verfahren zur Aufbereitung von Kunststoffen sowie Verwendung von aufbereiteten Kunststoffen als Adsorptionsmittel für Mineralöl und dergleichen.

Aufgrund ihrer großen Widerstandsfähigkeit wird die Beseitigung von bestimmten gebrauchten Kunststoffen wie z.B. kompaktem und geschäumtem Polystyrol und Polyurethan sowie von Mischpolymeren von Styrol und Ethylen oder Styrol und Propylen zunehmend problematisch. Anders als Polyethylen werden diese Kunststoffe nicht in wesentlichem Maße durch UV-Einwirkung an der Luft zersetzt.

Diese Kunststoffe werden deshalb derzeit auf folgende Weise als sogenannte Sekundärrohstoffe wiederverwendet:

In der Bauindustrie werden sie als Betonzuschlagstoffe zu einem leichten Beton (Polymerbeton) verarbeitet. Bauelemente aus diesem Beton erfüllen hohe Anforderungen an Wärmeisolation und Schallschutz. Außerdem wird aufbereitetes Styropor als Frostschutzschicht im Bauwesen und im Straßenbau eingesetzt.

Formstoffe aus Polystyrol sind thermoplastisch und lassen sich durch Einschmelzen in den Ausgangsstoff Polystyrol überführen. Die so gewonnenen Recyclingprodukte werden zur Herstellung von Spritzgußteilen wie z. B. Kleiderbügeln, Blumentöpfen usw. eingesetzt.

Gemahlene Schaumstoffabfälle aus Styropor werden als Bodenhilfsstoff, also als Zusatzstoff zur besseren Belüftung bei schweren Böden, zur Drainage sowie als Zusatzstoff beim Kompostieren verwendet.

Durch Hydrierung ist möglich, gebrauchte Styroporabfälle in ihre Basisrohstoffe zurückzuführen. Diese Methode ist aber technisch sehr aufwendig, mit hohen Energiekosten verbunden und deshalb unwirtschaftlich.

Wo eine Wiederverwendung der Kunststoffe schließlich nicht durchgeführt werden kann, ist entweder die Ablagerung in einer Deponie möglich, weil durch die hohe Beständigkeit dieser Kunststoffe keine Grundwassergefährdung eintritt. Die Ablagerung auf Deponien ist aber aufgrund des großen Volumens der geschäumten Kunststoffe nicht mehr unproblematisch, da Deponiekapazität nicht unbeschränkt zur Verfügung steht.

Andererseits entsteht aufgrund zunehmender Verschmutzung von Böden, wie z. B. Meeresstränden mit Kohlenwasserstoffen ein zunehmender Bedarf an preiswerten und ökologisch unbedenklichen Adsorptionsmitteln für diese Kohlenwasserstoffe. Der Grund hierfür sind Unfälle mit Tankschiffen, die sich aufgrund des zunehmenden Transportvolumens häufen. Auch wird gelegentlich von Schiffen Altöl unkontrolliert in die offene See abgelassen, das dann irgendwann auf einen Strand zutreibt und diesen verseucht. Ein anderes Problem, das nicht im Zusammenhang mit der Schiffahrt steht, sind Beschädigungen von Pipelines, bei denen immer wieder große Mengen an Erdöl austreten. Auch hierbei werden erhebliche Flächen und Volumina des umgebenden Bodens verseucht und damit unbrauchbar gemacht. Ein letztes Beispiel für die Notwendigkeit, kohlenwasserstoffverseuchte Feststoffe mit Adsorptionsmitteln zu reinigen, sind die Verseuchungen, die von nicht zeitgemäßen Industriebetrieben hinterlassen werden. Hier kann sowohl der Boden unter dem Industriegelände mit Schadstoffen beladen sein als auch der beim Abriß von Gebäuden entstehende Schutt.

Es ist daher Aufgabe der Erfindung, ein Verfahren zur Aufbereitung von Kunststoffen sowie Verwendung von aufbereiteten Kunststoffen als Adsorptionsmittel für Mineralöl und dergleichen zu schaffen, die gebrauchte Kunststoffe einer vorteilhaften zweiten Nutzung zugänglich machen.

Diese Aufgabe wird von einem Verfahren des Anspruchs 1 sowie von einer Verwendung mit den Merkmalen des Anspruchs 9 gelöst.

Weil bei dem neuen Verfahren zur Aufbereitung von Kunststoffen zu einem Produkt die Schritte:
- Sortieren der Kunststoffe in einzelne Sorten oder Gruppen von Sorten;
- Zerkleinern der Kunststoffe auf eine Partikelgröße von 5 mm bis 20 mm für aufgeschäumte Kunststoffe oder auf eine Partikelgröße von 1 mm bis 10 mm für nicht aufgeschäumte Kunststoffe;
vorgesehen sind, kann das Verfahren einfach und mit einer großen Anzahl von verschiedenen Materialien durchgeführt werden. Es führt zu einem wirksamen und für Rohöl sowie Mineralölprodukte spezifisch geeigneten Adsorptionsmittel. Für eine spätere Anwendung des Adsorptionsmittels ist es günstig, das Produkt auf eine Korn- oder Flockengröße von 1 bis 8 mm zu zerkleinern.

Für eine einfache Zerkleinerung ist vorgesehen, die Kunststoffe zu mahlen, zu schneiden oder zu zerreiben. Dabei kann die Zerkleinerung der Kunststoffe mittels Wasserstrahl oder Luft zu zerkleinern.

Ein besonders geeignetes Produkt ergibt sich, wenn der Kunststoff auf der Basis von aufgeschäumtem oder nicht aufgeschäumtem Mischpolymer von Styrol mit Olefinen mit 1 bis 8 Kohlenstoffatomen, vorzugsweise mit 2 bis 4 Kohlenstoffatomen gefertigt ist; insbesondere vorteilhaft ist, wenn das Olefin Ethylen, Propylen, Butylen oder Isobutylen ist.. Auch ein Kunststoff, auf der Basis von Polyurethan ist gut verwendbar.

Eine bessere Benetzung des Produkts mit zu adsorbierenden Schadstoffen ergibt sich, wenn zusätzlich vorgesehen ist, das Produkt mit Diolen und/oder Triolen enthaltenden Lösungen zu behandeln.

Eine bevorzugte Verwendung von derart aufbereiteten Kunststoffen ist die Verwendung als Adsorptionsmittel für Mineralölprodukte.

Im folgenden wird die vorliegende Erfindung anhand von Ausführungsbeispielen beschrieben.

### 1. Beispiel

Aufgeschäumtes Polystyrol aus einer Verpackung, wie sie z.B. für Elektronikgeräte verwendet wird, wird auf eine Flockengröße von etwa 8 mm zerkleinert. Dabei wird die glatte Oberfläche der Polystyrolpartikel zerrissen und es ergibt sich ein Produkt mit offenporiger schaumartiger Struktur. Dieses Produkt wird zur Senkung der statischen Aufladung der Oberfläche mit einer Lösung behandelt, in der Triole enthalten sind.

Das so behandelte Produkt kann als Adsorptionsmittel für Schadstoffe wie Schweröle, Rohöl etc. eingesetzt werden. Dabei wird in Anwesenheit von Wasser der Schadstoff nahezu selektiv aufgenommen. Ölverschmutzungen an Gewässern können so bekämpft werden.

Das Produkt kann mehrfach verwendet werden, da es sich nach Eintreten der Sättigung auspressen läßt. Es kann nach Ende der vorgesehenen Nutzung problemlos verbrannt werden, wobei in Feuerungsanlagen der durch anhaftendes Rohöl gesteigerte Brennwert vorteilhaft ist. Eine Stützfeuerung ist nicht oder nur in geringem Maße erforderlich.

Sofern die Ausgangsstoffe ohne FCKW-Verwendung aufgeschäumt wurden, besteht keine Gefahr, daß bei der Verbrennung Dioxine entstehen.

### 2. Beispiel

Gebrauchte Einwegverpackungen aus nicht geschäumtem Polypropylen oder anderen Alkenen (Polyethylen etc.) werden auf eine Korngröße von etwa 1 mm bis 4 mm gemahlen und anschließend wie im Beispiel 1 mit einer Lösung von Diolen oder Triolen antistatisch behandelt.

Das so erhaltene Produkt ist geeignet zur Adsorption von Benzin, Dieselkraftstoff und anorganischen sowie organischen Verbindungen, insbesondere auch von organischen Säuren.

Aufgrund der im Vergleich zum ersten Beispiel größeren Dichte kann das Produkt auch bei Wind und im Trockenen als streufähiges Adsorptionsmittel eingesetzt werden, da es durch Luftbewegungen nicht wesentlich zerstreut wird.

Dieses Adsorptionsmittel kann nach Gebrauch beispielsweise aufgesaugt und gegebenenfalls auch verbrannt werden.

Zur Veranschaulichung der Adsorptionskapazität verschiedener aufgeschäumter und nicht aufgeschäumter Polymere sollen schließlich die folgenden Tabellen dienen, in denen die gravimetrische und volumetrische Adsorptionskapazität von Polystyrol (EPS), Polyurethan (EPU), Polyethylen (EPE), Polyethylen-Polypropylen-Mischpolymer (EPE + EPP) sowie der nicht aufgeschäumten Polymere Polystyrol (PS), Polyethylen (PE) sowie Polystyrol-Etherpolyphenol-Copolymer im Bezug auf Öl und Benzin dargestellt ist.

| **Polymer** | **Menge in Gramm** | **Öl in ml** | **Benzin in ml** |
|---|---|---|---|
| | | | |

| *A. Aufgeschäumte Polymere* | | | |
|---|---|---|---|
| 1. EPS (Polystyrol) | 10 | 300 | lösbar |
| 2. EPU (Polyurethan) | 10 | 290 | 230 |
| 3. EPE (Polyethylen) | 10 | 265 | 130 |
| 4. EPE + EPP-Copolymer | 10 | 300 | 216 |

| *B. Nicht aufgeschäumte Polymere* | | | |
|---|---|---|---|
| 5. PS - hart | 10 | 97 | beständig |
| 6. PE - hart | 10 | 104 | 74 |
| 7. EPS + Etherpolyphenol EPS+PE+FH-106, Copolymer adsorbiert Kohlenwasserstoffe und chem. Substanzen | 10 | 162 | 141 |

| **Polymer** | **Menge in ml** | **Öl in ml** | **Benzin in ml** |
|---|---|---|---|
| | | | |

| *A. Aufgeschäumte Polymere* | | | |
|---|---|---|---|
| 1. EPS (Polystyrol) | 100 | 90 | lösbar |
| 2. EPU (Polyurethan) | 100 | 88 | 70 |
| 3. EPE (Polyethylen) | 100 | 80 | 40 |
| 4. EPE + EPP-Copolymer | 100 | 92 | 65 |

| *B. Nicht aufgeschäumte Polymere* | | | |
|---|---|---|---|
| 5. PS - hart | 100 | 68 | beständig |
| 6. PE - hart | 100 | 73 | 52 |
| 7. EPS + Etherpolyphenol EPS+PE+FH-106, Copolymer adsorbiert Kohlenwasserstoffe und chem. Substanzen | 100 | 114 | 99 |

## Patentansprüche

1. Verfahren zur Aufbereitung von Kunststoffen zu einem Produkt, mit folgenden Schritten:
- Sortieren der Kunststoffe in einzelne Sorten oder Gruppen von Sorten;
- Zerkleinern der Kunststoffe auf eine Partikelgröße von 5 mm bis 20 mm für aufgeschäumte Kunststoffe oder auf eine Partikelgröße von 1 mm bis 10 mm für nicht aufgeschäumte Kunststoffe.

2. Verfahren nach einem der vorhergehenden Ansprüche, **gekennzeichnet,** daß vorgesehen ist, das Produkt auf eine Korn- oder Flockengröße von 1 bis 8 mm zu zerkleinern.

3. Verfahren nach einem der vorhergehenden Ansprüche, **dadurch gekennzeichnet,** daß vorgesehen ist, die Kunststoffe zu mahlen, zu schneiden oder zu zerreiben.

4. Verfahren nach einem der vorhergehenden Ansprüche, **dadurch gekennzeichnet,** daß vorgesehen ist, die Kunststoffe mittels Wasserstrahl oder Luft zu zerkleinern.

5. Verfahren nach einem der vorhergehenden Ansprüche, **dadurch gekennzeichnet,** daß der Kunststoff auf der Basis von aufgeschäumtem oder nicht aufgeschäumtem Mischpolymer von Styrol mit Olefinen mit 1 bis 8 Kohlenstoffatomen, vorzugsweise mit 2 bis 4 Kohlenstoffatomen gefertigt ist.

6. Verfahren nach einem der vorhergehenden Ansprüche 1 bis 4, **dadurch gekennzeichnet,** daß der Kunststoff auf der Basis von Polyurethan gefertigt ist.

7. Verfahren nach Anspruch 5, **dadurch gekennzeichnet,** daß das Olefin Ethylen, Propylen, Butylen oder Isobutylen ist.

8. Verfahren nach einem der vorhergehenden Ansprüche, **dadurch gekennzeichnet,** daß zusätzlich vorgesehen ist, das Produkt mit Diolen und/oder Triolen enthaltenden Lösungen zu behandeln.

9. Verwendung von nach einem der Ansprüche 1 bis 8 aufbereiteten Kunststoffen als Adsorptionsmittel für Mineralölprodukte, tierische oder pflanzliche Fette, und/oder chemische Erzeugnisse.
